# EUROPEAN PATENT APPLICATION

(11) **EP 4 751 913 A1**
(43) Date of publication of application: **03.06.2026**
(21) Application number: 24845285.6
(22) Date of filing: 24.06.2024
(51) Int. Cl.: B32B 27/40, B32B 27/00, B65D 65/40

(54) **PACKAGING MATERIAL AND PACKAGING BAG**

(30) Priority: 27.07.2023 JP 2023122452
(71) Applicant: Toppan Holdings Inc., Tokyo 110-0016 (JP)
(72) Inventor: YOSHIFUJI, Akira, Tokyo 110-0016 (JP); SHIMIZU, Kosuke, Tokyo 110-0016 (JP); OI, Miho, Tokyo 110-0016 (JP); HORIGUCHI, Hironobu, Tokyo 110-0016 (JP)
(74) Representative: TBK
(86) International application number: PCT/JP2024/022886
(87) International publication number: WO 2025/022903

(57) **Abstract**

A packaging material 10 includes a first substrate 1, a water-based ink layer 2, an adhesive layer 3, and a second substrate 4 in this order. The adhesive layer 3 is formed of a urethane-based adhesive containing a polyisocyanate and a polyol. The polyisocyanate contains a chain isocyanate with a symmetrical structure or an isocyanate polymer derived from the chain isocyanate. The polyisocyanate partially penetrates a region near the interface between the water-based ink layer 2 and the first substrate 1 so as to satisfy formula (a): Formula (a): (Nᵢ - Nᵢᵢ) ≥ 0.5.

## Description

### [Technical Field]

The present disclosure relates to a packaging material and a packaging bag.

### [Background Art]

Packaging materials used for packaging bags (e.g., flexible packaging bags) subjected to heat treatments or pressure-heat treatments, including boiling and retort processing, have conventionally been laminates with multilayer structures composed of materials that, while considering cost-effectiveness, incorporate features such as content preservation performance, heat resistance, pressure resistance, durability (strength) against external stress, and printability.

The field of packaging materials is moving toward the reduction or elimination of volatile organic compounds (VOCs) for greater eco-friendliness. More specifically, the formation of printed layers with characters, pictures, patterns, or the like is shifting from oil-based inks containing solvents classified as volatile organic compounds (VOCs)(e.g., toluene, methyl ethyl ketone) to solvent-free, water-based inks. Water-based inks, which are free from organic solvents classified as VOCs, offer the advantage of improving the environments of production sites and eliminating the problem of residual organic solvents in packaging materials. For example, Patent Literature 1 describes a heat-sterilizable packaging laminate with water-based ink.

### [Citation List]

### [Patent Literature]

PTL 1: JP 2001-79986 A

### [Summary of the Invention]

### [Technical Problem]

When a printed layer is formed with water-based ink, that is, when a packaging material includes a water-based ink layer as a printed layer, the adhesive strength between the water-based ink layer and the adjacent layer (e.g., an adhesive layer) tends to decrease, reducing the sealing strength of the packaging bag (pouch). The decrease in the adhesive strength is noticeable particularly after retort processing, which may cause interlayer separation (delamination).

The present disclosure has been made in view of the above circumstances, and an object of the disclosure is to provide a packaging material capable of producing a packaging bag having sufficient sealing strength and a packaging bag made with the packaging material.

### [Solution to Problem]

Aspects of the present disclosure are provided in [1] to [11] below.
[1] A packaging material comprising: a first substrate; a water-based ink layer; an adhesive layer; and a second substrate in this order, in which
   the adhesive layer is formed of a urethane-based adhesive containing a polyisocyanate and a polyol,
   the polyisocyanate contains a chain isocyanate with a symmetrical structure or an isocyanate polymer derived from the chain isocyanate, and
   the polyisocyanate partially penetrates a region near the interface between the water-based ink layer and the first substrate so as to satisfy formula (a):

      Formula (a): (Nᵢ - Nᵢᵢ) ≥ 0.5

      wherein in formula (a),
   Nᵢ denotes the nitrogen content (unit: % by mass) in the first substrate measured in region (i) at a distance within 0.06 to 0.26 µm from the interface, and
   Nᵢᵢ denotes the average of the nitrogen contents (unit: % by mass) in the first substrate measured in 1-µm-thick region (ii), 1-µm-thick region (iii), and 1-µm-thick region (iv) including positions at distances from the interface corresponding to 30%, 60%, and 80% of the thickness of the first substrate, respectively.
[2] The packaging material according to [1], in which the polyisocyanate contains a biuret or an isocyanurate of the chain isocyanate as the isocyanate polymer.
[3] The packaging material according to [1] or [2], in which the chain isocyanate is hexamethylene diisocyanate.
[4] The packaging material according to any one of [1] to [3], in which the water-based ink layer is formed from water-based flexographic ink.
[5] The packaging material according to any one of [1] to [4], in which the first substrate includes at least one selected from the group consisting of an oriented polyethylene terephthalate film, an oriented polypropylene film, an oriented nylon film, and an oriented polyethylene film.
[6] The packaging material according to any one of [1] to [5], in which the first substrate includes a water vapor barrier layer.
[7] The packaging material according to any one of [1] to [6], in which the polyol contains a polyester polyol.
[8] The packaging material according to any one of [1] to [7], in which the urethane-based adhesive is an adhesive for dry lamination.
[9] The packaging material according to any one of [1] to [8], in which (Nᵢ - Nᵢᵢ) is greater than or equal to 1.2.
[10] The packaging material according to any one of [1] to [9], in which the first substrate and the second substrate have an adhesive strength of 1.5 N/15 mm or more therebetween, the adhesive strength being measured according to the following procedure (1) to (5):
   (1): two sheets each measuring 140 mm wide and 100 mm long are cut out from the packaging material and aligned with the second substrates of the two sheets facing each other so that the four edges of the sheets coincide, and three of the four edges are heat-sealed to prepare a packaging bag having one open edge,
   (2): after 50 g of water is added to the packaging bag, the open edge of the packaging bag is heat-sealed to prepare a test pouch,
   (3): the test pouch prepared in (2) is subjected to retort processing at 121 °C for 30 minutes,
   (4): after the retort processing in (3), a test piece measuring 15 mm wide and 200 mm long is cut out from one of the two sheets forming the test pouch, and
   (5): the test piece is subjected to a 15-mm-wide T-peel test at a peel rate of 300 mm/min under conditions of 20 °C and 30% RH in accordance with JIS K 6854 to measure the adhesive strength between the first substrate and the second substrate.
[11] A packaging bag formed by fabricating the packaging material according to any one of [1] to [10] into a bag.

### [Advantageous Effects of the Invention]

The present disclosure can provide a packaging material capable of producing a packaging bag having sufficient sealing strength and a packaging bag made with the packaging material.

### [Brief Description of the Drawings]

[Fig. 1] Fig. 1 is a schematic cross-sectional view of one embodiment of a packaging material according to the present disclosure.
[Fig. 2] Fig. 2 is a schematic cross-sectional view of another embodiment of the packaging material according to the present disclosure.
[Fig. 3] Fig. 3 is a schematic plan view of an embodiment of a packaging bag made with the packaging material according to the present disclosure.

### [Description of the Embodiments]

As used herein, a numerical range indicated by "to" refers to the range that includes the numbers before and after "to" as the minimum and maximum values. Unless otherwise specified, the numbers before and after "to" are in the same unit. For numerical ranges described herein, the upper or lower limit of each numerical range may be replaced with that specified in Examples. Separately described upper limits and lower limits may optionally be combined. The term "A or B" may refer to either A or B, or both.

Embodiments of the present disclosure will be described in detail below referring to the drawings as appropriate. Note that the present disclosure is not limited to the following embodiments. Like reference numerals designate identical or corresponding components throughout the drawings, and redundant description is omitted. Dimensional ratios in the drawings are not limited to those shown in the drawings.

### <Packaging Material>

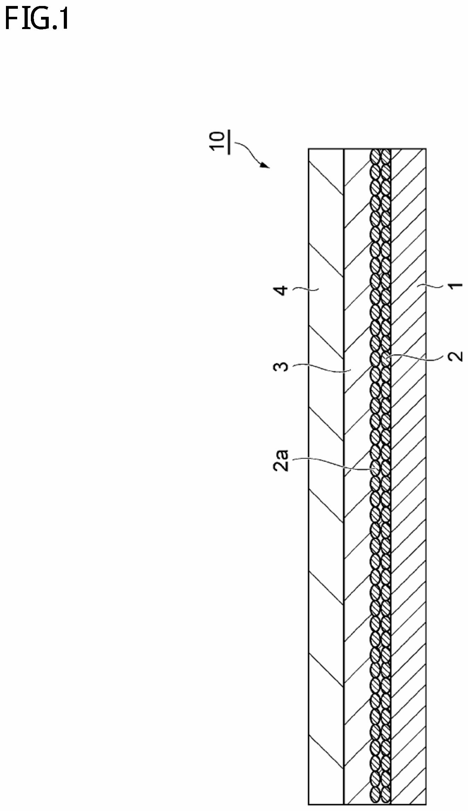

An embodiment of the present disclosure is a packaging material including a first substrate, a water-based ink layer, an adhesive layer, and a second substrate in this order, for example, a sheet-like laminate illustrated in Fig. 1. Fig. 1 illustrates a packaging material 10 composed of a first substrate 1, a water-based ink layer 2, an adhesive layer 3, and a second substrate 4, with the adhesive layer 3 bonding the water-based ink layer 2 and the second substrate 4 together. In Fig. 1, reference sign 2a denotes the pigment in the water-based ink layer.

In the above packaging material, the adhesive layer is formed of a urethane-based adhesive containing a polyisocyanate and a polyol, and the polyisocyanate contains chain isocyanates with a symmetrical structure or an isocyanate polymer derived from the chain isocyanates. Hereinafter, the chain isocyanates are referred to as polyisocyanate (a1), the isocyanate polymer is referred to as polyisocyanate (a2), and these polyisocyanates are collectively referred to as polyisocyanate (A).

In the above packaging material, the polyisocyanate partially penetrates a region near the interface between the water-based ink layer and the first substrate so as to satisfy formula (a) below. The interface between the water-based ink layer and the first substrate refers to the outermost surface of the first substrate that is directly in contact with the water-based ink layer. The vicinity of the interface between the water-based ink layer and the first substrate refers to a distance range that affects the semi-quantitative elemental content determined by SEM-EDX described later during interface analysis (e.g., the range within 0.4 µm from the interface).

Formula (a): (Nᵢ - Nᵢᵢ) ≥ 0.5

In formula (a), Nᵢ denotes the nitrogen content (EDX semi-quantitative elemental content, unit: % by mass) in the first substrate measured in region (i) within 0.06 to 0.26 µm from the interface (the interface between the first substrate and the water-based ink layer). Nᵢᵢ denotes the average of the nitrogen contents (EDX semi-quantitative elemental content, unit: % by mass) in the first substrate measured in 1-µm-thick region (ii), 1-µm-thick region (iii), and 1-µm-thick region (iv) including positions at distances from the interface corresponding to 30%, 60%, and 80% of the thickness of the first substrate, respectively. Region (i), region (ii), region (iii), and region (iv) do not overlap each other. For example, when the first substrate has a thickness of 5 µm, region (ii) includes a position at a distance of 1.5 µm from the interface (a position corresponding to 30% of the thickness of the first substrate) but does not include a position at a distance of 3.0 µm from the interface (a position corresponding to 60% of the thickness of the first substrate).

The above packaging material enables the production of a packaging bag having sufficient sealing strength.

The sealing strength provided by the above packaging material is, for example, measured according to the following procedure (a1) to (a5):
(a1) Two sheets each measuring 90 mm wide and 140 mm long are cut out from the packaging material, aligned with the second substrates of the two sheets facing each other so that the four edges of the sheets coincide, and heat-sealed to prepare a laminate sample.
(a2) The laminate sample is subjected to a 15-mm-wide T-peel test at a peel rate of 300 mm/min under 20 °C and 30% RH conditions in accordance with JIS K 6854 to measure the sealing strength of the laminate sample.

The heat sealing in (a1) may also be performed by heating and pressing the two aligned sheets at 150 °C and 3 kg/cm² for 0.5 seconds.

The sealing strength measured in the above procedure is, for example, 45 N/15 mm or more and may be 50 N/15 mm or more or 55 N/15 mm or more. When the adhesive strength between the first substrate and the second substrate is insufficient, delamination may occur between the substrates, resulting in a significant reduction in the sealing strength. However, when the sealing strength is 45 N/15 mm or more, the likelihood of delamination between the substrates is reduced, and the adhesive strength can be determined to be sufficient. The sealing strength measured in the above procedure has an upper limit of, for example, 70 N/15 mm.

The above packaging material can also provide sufficiently high interlayer adhesive strength (between the first substrate and the second substrate) even after retort processing. The above packaging material is thus retortable. This packaging material can provide a retortable packaging bag exhibiting high resistance to interlayer separation and reduced occurrence of issues such as deterioration of the surface of the water-based ink layer, reduction in barrier performance, or an increased risk of tearing caused by interlayer separation. As used herein, the term "retortable" refers to a packaging bag subjected to retort processing or use for the production of the packaging bag. The retort processing is, for example, moist heat sterilization defined in the Food Sanitation Act, referring to moist heat sterilization conducted at temperatures of 100 °C or higher. The retort processing may be conducted under pressure (e.g., 0.2 MPa or more).

The adhesive strength between the first substrate and the second substrate of the above packaging material is, for example, measured according to the following procedure (b1) to (b5). (b1): Two sheets each measuring 140 mm wide and 100 mm long are cut out from the packaging material and aligned with the second substrates of the two sheets facing each other so that the four edges of the sheets coincide, and three of the four edges are heat-sealed to prepare a packaging bag having one open edge.
(b2): After 50 g of water is added to the packaging bag, the open edge of the packaging bag is heat-sealed to prepare a test pouch.
(b3): The test pouch prepared in (b2) is subjected to retort processing at 121 °C for 30 minutes.
(b4): After the retort processing in (b3), a test piece measuring 15 mm wide and 200 mm long is cut out from one of the two sheets forming the test pouch.
(b5): The test piece is subjected to a 15-mm-wide T-peel test at a peel rate of 300 mm/min under 20 °C and 30% RH conditions in accordance with JIS K 6854 to measure the adhesive strength between the first substrate and the second substrate.

The heat sealing in (b1) and (b2) may also be performed by heating and pressing the corresponding edges with a 15-mm-wide seal bar at 150 °C and 3 kg/cm² for 0.5 seconds.

The adhesive strength measured in the above procedure may be, for example, 1.5 N/15 mm or more, 2.5 N/15 mm or more, or 3.5 N/15 mm or more. The adhesive strength measured in the above procedure has an upper limit of, for example, 10 N/15 mm.

Packaging bags made of packaging materials including a water-based ink layer tend to experience interlayer separation particularly at a low temperature (e.g., about 5 °C). However, the above packaging material tends to exhibit sufficiently high interlayer adhesive strength even at a low temperature. Accordingly, even if a packaging bag made of the above packaging material is, for example, dropped immediately after being taken out of a refrigerator, the risk of content leakage due to interlayer separation is low.

Although the cause of the above effect is not clearly understood, the present inventors hypothesize the following.

First, when a packaging material includes a water-based ink layer as a printed layer, the adhesive strength between the water-based ink layer and the adjacent layer may decrease because of the low cohesive strength of the binder resin used for the water-based ink. However, in the above packaging material, the polyisocyanate partially penetrates a region near the interface between the water-based ink layer and the first substrate so as to satisfy formula (a). In formula (a) above, Nᵢ corresponds to the total amount of nitrogen (N) derived from the polyisocyanate that has penetrated the region near the interface and nitrogen (N) derived from the nitrogen compound contained in the first substrate itself, whereas Nᵢᵢ corresponds to the amount of nitrogen (N) derived from the nitrogen compound contained in the first substrate itself. Accordingly, the difference between these amounts (Nᵢ - Nᵢᵢ) is believed to correspond to the amount of nitrogen (N) derived from the polyisocyanate that has penetrated the region near the interface between the water-based ink layer and the first substrate. As such, in the packaging material, at least a certain amount of polyisocyanate penetrates the region near the interface between the water-based ink layer and the first substrate. As a result, in the water-based ink layer, a polyisocyanate-derived network structure is formed extending to the region near the interface between the water-based ink layer and the first substrate, and the network structure compensates for the decrease in the interlayer adhesive strength after retort processing. For this reason, the above effect is presumed to be achieved. Although not apparent, when the polyisocyanate in the adhesive does not contain polyisocyanate (A) above, (Nᵢ - Nᵢᵢ) becomes close to zero, and thus polyisocyanate (A) above is presumed to have high penetrability into the adhesive layer and contribute to the formation of the network structure in the region near the interface. That is, the polyisocyanate that has penetrated the region near the interface between the water-based ink layer and the first substrate can be polyisocyanate (A).

In formula (a) above, (Nᵢ - Nᵢᵢ) is preferably greater than or equal to 1.2, and more preferably greater than or equal to 1.4. As (Nᵢ - Nᵢᵢ) increases, the interlayer adhesive strength before and after retort processing tends to become higher. The upper limit of (Nᵢ - Nᵢᵢ) may be, for example, 10.0, 5.0, or 3.5. That is, (Nᵢ - Nᵢᵢ) may be, for example, 0.5 to 10.0, 0.5 to 5.0, 0.5 to 3.5, 1.2 to 10.0, or 1.4 to 10.0. More specifically, Nᵢ and Nᵢᵢ are measured in accordance with the method described in Examples. Note that (Nᵢ - Nᵢᵢ) can be adjusted by, for example, changing the type and amount of polyisocyanate (A), changing the type and thickness of the water-based ink layer, or modifying the drying and curing rates during the formation of the adhesive layer. For example, lowering the heating temperature and extending the drying time and the curing time allow the adhesive to penetrate more easily to the region near the interface, increasing (Nᵢ - Nᵢᵢ).

### (First Substrate)

The first substrate is a support for the water-based ink layer and can also be referred to as a target for water-based ink printing. The first substrate includes, for example, a resin film. Examples of resins forming the resin film include polyester-based resins, polyamide-based resins, polyaramide-based resins, polypropylene-based resins, polyethylene-based resins, polyvinyl chloride-based resins, polystyrene-based resins, polycarbonate-based resins, polyacetal-based resins, and fluororesins. The resin film may be formed of one or two or more resins.

In view of the tendency to increase the interlayer adhesive strength before and after retort processing, the resin film is preferably a resin film containing at least one resin selected from the group consisting of polyester-based resins, polyamide-based resins, polyethylene-based resins, and polypropylene-based resins, and more preferably a resin film containing at least one resin selected from the group consisting of polyethylene terephthalate, polypropylene, and polyamide (nylon)/polyethylene-based resins.

The resin film may be a non-oriented resin film or may be a uniaxially or biaxially oriented resin film (stretched film). The resin film is preferably a resin film stretched in two directions (a biaxially oriented resin film) in terms of printability, dimensional stability, and puncture resistance. In view of the tendency to increase the interlayer adhesive strength before and after retort processing, the resin film is preferably at least one selected from the group consisting of an oriented polyethylene terephthalate (PET) film, an oriented polypropylene (OPP) film, an oriented nylon (ONY) film, and an oriented polyethylene film, and more preferably at least one selected from the group consisting of a biaxially oriented polyethylene terephthalate film, a biaxially oriented polypropylene film, a biaxially oriented nylon film, a uniaxially oriented polyethylene film, and a biaxially oriented polyethylene film.

The first substrate may include two or more types of resin films. That is, the first substrate may be a multilayered substrate (laminate). When the first substrate has a multilayer structure, the resin film preferably forms the outermost layer of the first substrate and contacts the water-based ink layer. More preferably, the resin film in the preferable form described above forms the outermost layer of the first substrate and contacts the water-based ink layer.

The resin film may have a thickness sufficient to provide strength and rigidity to withstand heat and pressure treatment, and the thickness may be, for example, 5 µm to 100 µm or 8 µm to 50 µm. When the thickness of the resin film is 100 µm or less, the flexible packaging bag is easy to tear open by hand, and the manufacturing costs can be reduced. When the thickness of the resin film is 8 µm or more, sufficient strength and rigidity can be easily achieved.

The first substrate may consist of the resin film or include a layer other than the resin film. For example, the first substrate may also include a water vapor barrier layer in addition to the resin film. The water vapor barrier layer may be disposed on the surface facing the water-based ink layer of the resin film or may be disposed on the surface facing away from the water-based ink layer of the resin film. When the first substrate includes a water vapor barrier layer, the resin film may be in contact with the water-based ink layer, or the water vapor barrier layer may be in contact with the water-based ink layer.

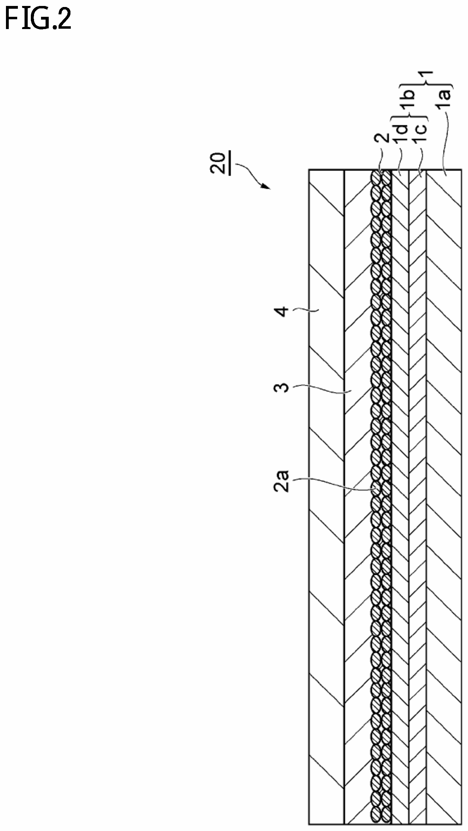

As illustrated in Fig. 2, the water vapor barrier layer may include an inorganic thin film layer and a water vapor barrier coating layer. Fig. 2 illustrates a packaging material 20 in which the first substrate 1 includes a resin film 1a and a water vapor barrier layer 1b, and the water vapor barrier layer 1b includes an inorganic thin film layer 1c and a water vapor barrier coating layer 1d. As illustrated in Fig. 2, the inorganic thin film layer and the water vapor barrier coating layer may be disposed on the resin film in this order.

The inorganic thin film layer is formed by, for example, depositing metal or an oxide, nitride, or oxynitride of silicon or other elements (e.g., vacuum deposition). Specific examples of materials for the inorganic thin film layer include metals such as aluminum, titanium, copper, indium, and tin or oxides thereof (e.g., alumina), or silicon, silicon oxides, as well as metal and silicon nitrides and oxynitrides. The inorganic thin film layer may also be a thin film layer including these multiple metals. In particular, an inorganic thin film layer containing aluminum, titanium, copper, indium, silicon oxides, silicon nitrides, or silicon oxynitrides tends to have both high transparency and barrier performance. Among others, an inorganic thin film layer containing silicon-containing oxides or oxynitrides tends to have higher barrier performance.

The inorganic thin film layer can be formed by vacuum evaporation (resistance heating vacuum deposition, electron beam heating vacuum deposition, induction heating vacuum deposition), sputtering (reactive sputtering, dual magnetron sputtering), and PECVD (with plasma generated by DC (Direct Current), RF (Radio Frequency), MF (Middle Frequency), DC pulse, RF pulse, and superimposed DC/RF methods). The method for forming the inorganic thin film layer can be selected as appropriate depending on the intended purpose or application. For example, sputtering can be selected for film uniformity, and vacuum evaporation may be selected for cost effectiveness.

The thickness of the inorganic thin film layer may be, for example, 5 nm or more and 100 nm or less. When the thickness of the inorganic thin film layer is 5 nm or more, high barrier performance can be easily achieved. When the thickness is 100 nm or less, cracking is minimized, and there is little reduction in water vapor and oxygen barrier performance, resulting in lower costs associated with reduced material usage and shorter formation time.

The inorganic thin film layer may be metallic foil, such as aluminum metal foil. In this case, the metallic foil may have a thickness of 6 to 9 µm.

The water vapor barrier coating layer can be formed by, for example, coating the inorganic thin film layer with a coating liquid containing a polar compound, such as polyvinyl alcohol, polyvinyl pyrrolidone, or ethylene vinyl alcohol, a chlorine-containing compound, such as polyvinylidene chloride, an Si-containing compound, a Ti-containing compound, an Al-containing compound, or a Zr-containing compound, and drying and curing the coating liquid. The disposed water vapor barrier coating layer can prevent various secondary damages during subsequent steps and also provide high barrier performance.

The thickness of the water vapor barrier coating layer may be, for example, 50 nm or more and 1000 nm or less. More preferably, the thickness may be 200 nm or more and 500 nm or less. When the thickness of the water vapor barrier coating layer is 50 nm or more, high water vapor barrier performance can be easily achieved. When the thickness is 1000 nm or less, the water vapor barrier coating layer is less prone to defects resulting from insufficient tracking performance.

The total thickness of the first substrate may be, for example, 5 µm to 100 µm or 8 µm to 50 µm.

### (Water-based Ink Layer)

The water-based ink layer is a layer formed of water-based ink. The water-based ink layer is formed by printing the water-based ink onto the first substrate. The water-based ink layer may be, for example, a water-based colored ink layer formed of water-based colored ink or a water-based colorless ink layer formed of water-based colorless ink (medium).

The water-based colored ink contains, for example, pigment, binder resin (also referred to as vehicle), and solvent (dispersion medium).

The pigment may be an inorganic pigment or an organic pigment. Examples of inorganic pigments include extender pigments such as titanium oxide (white pigment), carbon black (carbon black pigment), barium sulfate, and calcium carbonate. Examples of organic pigments include azo pigment, phthalocyanine pigment, dioxazine pigment, quinacridone pigment, isoindolinone pigment, and underglaze lake pigment.

The pigment may refer to a single pigment or a plurality of pigments. For example, the water-based ink layer may contain multiple pigments of different colors or multiple pigments with different particle sizes.

When the water-based ink layer is a water-based colored ink layer, the pigment content may be 30 to 90% by mass relative to the total mass of the water-based ink layer. When the pigment content is 30% by mass or more, excellent color development can be easily achieved, and the adhesive strength tends to be improved significantly. When the pigment content is 90% by mass or less, interlayer separation (delamination) is less likely to occur between the water-based ink layer and the adhesive layer. To further enhance the color development and reduce the likelihood of interlayer separation, the pigment content may be, for example, 35 to 85% by mass relative to the total mass of the water-based ink layer. When the water-based ink layer is a water-based colorless ink layer referred to as, for example, a medium, the pigment content is typically 0% by mass relative to the total mass of the water-based ink layer, although white pigment may be contained. Such colorless ink is used for providing an underlayer or adjusting the color of colored ink.

When the water-based ink contains pigment, the water-based ink layer formed by printing the water-based ink has inner pigment gaps due to contact between pigment particles. The gaps are interconnected in a mesh-like manner, resulting in the formation of continuous through-pores from the surface of the water-based ink layer. Accordingly, when the water-based ink contains pigment, the adhesive (in particular, polyisocyanate) can penetrate more easily into the water-based ink layer during the formation of the adhesive layer, and the (Nᵢ - Nᵢᵢ) value tends to increase.

The binder resin is, for example, an aqueous binder resin. Examples of aqueous binder resins include water-soluble binder resin, emulsion binder resin, and colloidal dispersion binder resin.

Examples of aqueous binder resins include natural resins, such as casein resin and shellac resin, and synthetic resins, such as rosin-modified maleic acid resin, styrene-maleic acid resin, styrene-acrylic acid resin, α-methylstyrene-acrylic acid resin, styrene-methacrylic acid resin, styrene-maleic acid-acrylic acid resin, acrylic acid-acrylate resin, acrylic acid-methacrylate resin, acrylic resin, urethane resin, acrylic-urethane resin, styrene resin, polyester resin, water-soluble polyamide resin, and water-based polyurethane resin. To improve the adhesive strength more significantly, the aqueous binder resin may be a resin having no urethane backbone. To further enhance the dispersion stability of the ink, the adhesion of the water-based ink layer, and the strength of the water-based ink layer, the water-soluble binder resin may contain a resin with no acid value or a low acid value as a main component and a combination of the resin and a resin with a high acid value.

When the water-based ink layer is a water-based colored ink layer, the aqueous binder resin content may be, for example, 15 to 60% by mass, 25 to 55% by mass, or 30 to 50% by mass relative to the total mass of the water-based ink layer. When the water-based ink layer is a water-based colorless ink layer, the aqueous binder resin content may be, for example, 60 to 100% by mass or 80 to 100% by mass relative to the total mass of the water-based ink layer.

The water-based ink solvent (dispersion medium) dissolves or disperses the binder resin in the water-based ink. The water-based ink solvent (dispersion medium) is, for example, water or a hydrophilic solvent. Examples of the hydrophilic solvent include alcoholic solvents, such as methanol, ethanol, propanol, and butanol. Although the water-based ink solvent (dispersion medium) may partially remain in the water-based ink layer, the solvent (dispersion medium) content is, for example, 1% by mass or less relative to the total mass of the water-based ink layer.

The water-based ink may contain an additive such as a dispersant, a plasticizer, wax, lubricant, or an antifoamer. The water-based ink layer may contain these components. Examples of the plasticizer include dioctyl terephthalate. Examples of the wax include polyethylene and polypropylene. Examples of the lubricant include calcium carbonate, barium sulfate, and clay. Examples of the antifoamer include agents that are based on silicone or hydrocarbon.

In order to improve the solubility and dispersibility of the resin into the solvent, the water-based ink may further contain basic compounds, such as ammonia, trimethylamine, sodium hydroxide, and potassium hydroxide. The water-based ink layer may contain these components.

Examples of usable water-based inks include water-based flexographic inks used for water-based flexographic printing and water-based inkjet inks used for inkjet printing. The water-based ink layer is preferably formed of water-based flexographic ink in view of the tendency to increase the (Nᵢ - Nᵢᵢ) value and the interlayer adhesive strength before and after retort processing. Although the cause of the likelihood of water-based flexographic printing to increase the (Nᵢ - Nᵢᵢ) value is not clearly understood, it seems to be because water-based inks used for flexographic printing tend to contain pigments at high concentrations to improve color development, and as a result, pigment gaps are easily formed in the water-based ink layer.

The thickness of the water-based ink layer is determined by, for example, calculating the average of film thicknesses measured at ten points, and the average film thickness is 0.2 to 5.0. The thickness of the water-based ink layer may be 3 µm or less or 1 µm or less. As the thickness of the water-based ink layer decreases, the (Nᵢ - Nᵢᵢ) value tends to increase, and also the interlayer adhesive strength before and after retort processing tends to increase.

Although Figs. 1 and 2 illustrate the water-based ink layer as a single layer, the water-based ink layer may have a multilayer structure of two or more layers. For example, the water-based ink layer may have a structure with two or more layers obtained by coating the surface of the first substrate with a first water-based ink layer containing pigment with a relatively small particle size, and then coating the surface of the first water-based ink layer with a second water-based ink layer containing pigment with a relatively large particle size (e.g., white pigment). When the packaging material includes the second water-based ink layer containing white pigment, the first water-based ink layer tends to have higher color development.

### (Adhesive Layer)

The adhesive layer is formed of a urethane-based adhesive containing a polyisocyanate and a polyol. More specifically, the adhesive contains a base resin containing a polyol and a curing agent containing a polyisocyanate, and the polyol and the polyisocyanate react to cure the adhesive, forming the adhesive layer. The adhesive layer thus contains polyurethane, which is the reaction product of a polyol and a polyisocyanate. The type of the polyisocyanate constituting the polyurethane in the adhesive layer can be determined through pyrolysis-GC/MS analysis at the monomer level.

### [Polyol]

Examples of the polyol include polyether polyols, such as polyoxypropylene polyols and polyoxytetramethylene glycols, hydrocarbon-based polyols, such as polycarbonate polyols, polybutadiene polyols, and polyacrylate polyols, and polyester polyols, such as polyadipate polyols and polycaprolactone diols. Among them, polyester polyols are preferably used for water resistance and heat resistance.

The polyester polyol is a compound containing two or more polyol hydroxyl groups (hydroxyl groups) and having a polyester structure as a main backbone. The polyester structure may be a polyester polyurethane structure. That is, the polyester polyol may be a polyester urethane polyol. The polyester polyol may further have a polyether structure in addition to the polyester structure and the polyurethane structure. The polyester polyol may be a single polyester polyol or a combination of two or more polyester polyols.

The polyester polyol may be a commercially available product. Examples of commercially available products include Takelac A525 (trade name; Takelac is a registered trademark (the same hereinafter)) manufactured by Mitsui Chemicals, Inc. and DICDRY LX-747 manufactured by DIC Corporation.

### [Polyisocyanate]

The polyisocyanate is composed of a compound having two or more isocyanate groups. The polyisocyanate contains polyisocyanate (A), which is described above. The polyisocyanate may contain either or both of polyisocyanate (a1) and polyisocyanate (a2).

Polyisocyanate (a1) is a chain isocyanate having a symmetrical structure. Polyisocyanate (a1) may be linear or branched. Polyisocyanate (a1) may be, for example, an aliphatic isocyanate. For example, aliphatic isocyanates may have 4 to 6 carbon atoms. Examples of aliphatic isocyanates include tetramethylene diisocyanate, hexamethylene diisocyanate, and pentamethylene diisocyanate. Polyisocyanate (a1) may be used singly or in any combination of two or more.

Polyisocyanate (a2) is an isocyanate polymer derived from a chain isocyanate having a symmetrical structure. Polyisocyanate (a2) may be a polymer (multimer) obtained by reacting (polymerizing) chain isocyanates or may be a polymer obtained by reacting (polymerizing) the thus obtained polymers. Polyisocyanate (a2) may be a copolymer obtained by reacting (polymerizing) a chain isocyanate and a monomer reactive with the isocyanate (e.g., an active hydrogen-containing compound, such as a polyol).

Examples of polyisocyanate (a2) include an isocyanurate of polyisocyanate (a1), a biuret of polyisocyanate (a1), and a polyol adduct (e.g., a trimethylolpropane adduct) of polyisocyanate (a1). Polyisocyanate (a2) may be used singly or in any combination of two or more.

In view of the tendency to increase the (Nᵢ - Nᵢᵢ) value and the interlayer adhesive strength before and after retort processing, polyisocyanate (A) preferably contains hexamethylene diisocyanate or an isocyanate polymer derived from the hexamethylene diisocyanate, more preferably an isocyanate polymer derived from hexamethylene diisocyanate, and still more preferably an isocyanurate of hexamethylene diisocyanate or a biuret of hexamethylene diisocyanate. Polyisocyanate (A) particularly preferably contains an isocyanurate of hexamethylene diisocyanate for water resistance.

In view of the tendency to increase the (Nᵢ - Nᵢᵢ) value and the interlayer adhesive strength before and after retort processing, the content of polyisocyanate (a1) may be 3% by mass or more, 15% by mass or more, or 25% by mass or more relative to the total solid content of the adhesive. The content of polyisocyanate (a1) may be 35% by mass or less or 15% by mass or less relative to the total solid content of the adhesive for cost effectiveness. From these perspectives, the content of polyisocyanate (a1) may be 3 to 35% by mass or 3 to 15% by mass relative to the total solid content of the adhesive. As used herein, the total solid content of the adhesive refers to, for the adhesive containing a solvent, the adhesive amount excluding the solvent content, and for the adhesive containing no solvent, the total adhesive amount.

In view of the tendency to increase the (Nᵢ - Nᵢᵢ) value and the interlayer adhesive strength before and after retort processing, the content of polyisocyanate (a2) may be 3% by mass or more, 15% by mass or more, or 25% by mass or more relative to the total solid content of the adhesive. The content of polyisocyanate (a2) may be 35% by mass or less or 15% by mass or less relative to the total solid content of the adhesive for cost effectiveness. From these perspectives, the content of polyisocyanate (a2) may be 3 to 35% by mass or 3 to 15% by mass relative to the total solid content of the adhesive.

In view of the tendency to increase the (Nᵢ - Nᵢᵢ) value and the interlayer adhesive strength before and after retort processing, the content of polyisocyanate (A) may be 3% by mass or more, 15% by mass or more, 25% by mass or more, or 50% by mass or more relative to the total solid content of the adhesive. The content of polyisocyanate (A) may be 70% by mass or less, 50% by mass or less, 35% by mass or less, or 15% by mass or less relative to the total solid content of the adhesive for cost effectiveness. From these perspectives, the content of polyisocyanate (A) may be 3 to 70% by mass, 3 to 50% by mass, 3 to 35% by mass, or 3 to 15% by mass and 15 to 70% by mass, 25 to 70% by mass, or 50 to 70% by mass relative to the total solid content of the adhesive.

The polyisocyanate may further contain a polyisocyanate other than polyisocyanate (A) (hereinafter referred to as polyisocyanate (B)).

Examples of polyisocyanate (B) include aromatic polyisocyanates, such as phenylene diisocyanate, toluene diisocyanate, diphenylmethane diisocyanate, and xylylene diisocyanate (meta-xylylene diisocyanate and para-xylylene diisocyanate), alicyclic polyisocyanates, such as isophorone diisocyanate, hydrogenated diphenylmethane diisocyanate, and hydrogenated xylylene diisocyanate, and isocyanate polymers derived from these polyisocyanates. Examples of isocyanate polymers include isocyanurates of the aromatic polyisocyanates or alicyclic polyisocyanates, biurets of the aromatic polyisocyanates or alicyclic polyisocyanates, and polyol adducts of the aromatic polyisocyanates or alicyclic polyisocyanates (e.g., trimethylolpropane adducts).

Polyisocyanate (B) may be a commercially available product. Examples of commercially available products include Takenate A52 (trade name; Takenate is a registered trademark (the same hereinafter)) manufactured by Mitsui Chemicals, Inc. and KX-75 manufactured by DIC Corporation.

Polyisocyanate (B) preferably contains isophorone diisocyanate in view of the tendency to increase the (Nᵢ - Nᵢᵢ) value and the interlayer adhesive strength before and after retort processing.

The content of polyisocyanate (B) may be 8% by mass or more or 14% by mass or more relative to the total solid content of the adhesive in view of the crosslink density with the polyol and the cohesive strength of the film. The content of polyisocyanate (B) may be 14% by mass or less relative to the total solid content of the adhesive in view of the tendency to increase the (Nᵢ - Nᵢᵢ) value and the interlayer adhesive strength before and after retort processing. From these perspectives, the content of polyisocyanate (B) may be 8 to 14% by mass relative to the total solid content of the adhesive.

The polyisocyanate may have an NCO value (unit: mol/g) of 1.0 × 10⁻³ or more, 2.0 × 10⁻³ or more, or 5.0 × 10⁻³ or more in view of the tendency to increase the cohesive strength of the adhesive layer before and after retort processing. The NCO value is measured according to JIS K 6806 (potentiometric titration).

In the adhesive, the ratio of the total number of moles of isocyanate groups (NCO groups) in the isocyanate-containing compound (e.g., polyisocyanate) to the total number of moles of active hydrogen groups in the active hydrogen-containing compound (e.g., polyol) (NCO/OH) may be 2.0 or more, 11.5 or less or 8.1 or less, and 2.0 to 11.5 or 2.0 to 8.1 in view of the crosslink density of the adhesive layer.

In addition to the active hydrogen-containing compound and the polyisocyanate, the adhesive may further contain additives such as a solvent, a dispersant, an antifoamer, a leveling agent, a stabilizer, a filler, a lubricant, a slip agent, and wax. These components may also be contained in the adhesive layer.

The adhesive may be an adhesive for dry lamination or an adhesive for solvent-free lamination.

Although the solvent (e.g., diluent) contained in the adhesive may partially remain in the adhesive layer, the solvent content is, for example, 1% by mass or less relative to the total mass of the adhesive layer. Examples of the solvent include ethyl acetate and methyl ethyl ketone.

The thickness of the adhesive layer is, for example, 0.5 to 5.0 µm. The thickness of the adhesive layer refers to the shortest distance from the surface facing the water-based ink layer to the surface facing away from the water-based ink layer, excluding the thickness of the adhesive-impregnated region of the water-based ink layer.

### (Second Substrate)

The second substrate 4 includes, for example, a sealant layer. The sealant layer is, for example, made of a thermally meltable and fusible resin. The resin forming the sealant layer may be, for example, a polyolefin-based resin, such as low-density polyethylene, medium-density polyethylene, high-density polyethylene, linear (straight-chain) low-density polyethylene, polypropylene, an ethylene-vinyl acetate copolymer, an ionomer resin, an ethylene-ethyl acrylate copolymer, an ethylene-acrylic acid copolymer, an ethylene-methacrylic acid copolymer, an ethylene-propylene copolymer, a methylpentene polymer, polyethylene, or polypropylene, or an acid-modified polyolefin resin obtained by modifying these resins with an unsaturated carboxylic acid, such as acrylic acid, methacrylic acid, maleic anhydride, or fumaric acid. The resin forming the sealant layer may be of a single type or two or more types.

The thickness of the sealant layer may be, for example, 5 to 300 µm or 10 to 100 µm.

The second substrate may consist of the sealant layer or include a layer other than the sealant layer. For example, the second substrate may also include a water vapor barrier layer in addition to the sealant layer. Details of the water vapor barrier layer are the same as the water vapor barrier layer that can be included in the first substrate.

The total thickness of the second substrate may be, for example, 10 µm to 200 µm.

The thickness (total thickness) of the packaging material may be, for example, 20 to 300 µm. Preferably, the thickness of the first substrate is 8 to 50 µm (e.g., 12 µm), the thickness of the water-based ink layer is 0.2 to 5.0 (e.g., 3 µm), the thickness of the adhesive layer is 0.5 to 5.0 µm (e.g., 3 µm), and the thickness of the second substrate is 10 to 100 (e.g., 60 µm). When the packaging material is used for a packaging bag that contains a liquid material, the thickness of the second substrate may be 100 to 200 µm (e.g., 120 µm).

### <Method for Producing Packaging Material>

Another embodiment of the present disclosure is a packaging material production method including: step (A) for printing a surface of a first substrate with water-based ink to form a water-based ink layer; step (B) for applying adhesive to the surface of the water-based ink layer facing away from the first substrate to form an adhesive layer; and step (C) for stacking a second substrate on the surface of the adhesive layer facing away from the water-based ink layer.

The water-based ink may be the above-described water-based ink for forming the water-based ink layer (the water-based ink containing pigment, binder resin, and solvent (dispersion medium)). The solvent content in the water-based ink is, for example, 40 to 80% by mass relative to the total mass of the water-based ink.

The water-based ink can be printed by, for example, a known method such as gravure printing, flexographic printing, or inkjet printing. In step (A), the water-based ink layer may be formed by solid printing, or the water-based ink layer may be formed by pattern printing with characters, shapes, symbols, pictures, and other desired patterns. After a first water-based ink layer is formed by solid printing, the first water-based ink layer may be subjected to pattern printing with a desired pattern to form a second water-based ink layer. As described above, the water-based ink is preferably water-based flexographic ink, and the water-based flexographic ink is preferably used for water-based ink printing by flexographic printing.

The adhesive may be the above-described adhesive for forming the adhesive layer (the adhesive containing an active hydrogen-containing compound and a polyisocyanate). These components may be combined immediately before the application. The adhesive can be applied by conventionally known methods such as casting, dipping, roll coating, gravure coating, screen printing, reverse coating, spray coating, kiss coating, die coating, metering bar coating, chamber doctor coating, and curtain coating, which are typically used.

When the adhesive contains solvent, the coating may be dried to remove the solvent after the application. The coating may be dried at, for example, 25 to 120 °C.

The stacking of the second substrate (the formation of the sealant layer) may be performed by, for example, applying a coating solution containing the above-described thermally meltable and fusible resin by conventionally known means such as dipping, roll coating, screen printing, and spraying. The sealant layer can also be formed by attaching a film or sheet made of the above-described resin.

In the production method in the present embodiment, for example, the type and amount of polyisocyanate contained in the adhesive and the type and thickness of the water-based ink layer can be modified to adjust the amount of polyisocyanate that penetrates into the water-based ink layer and the first substrate, thus enabling the packaging material in the above embodiment (i.e., the packaging material satisfying formula (a)) to be obtained.

### <Packaging Bag>

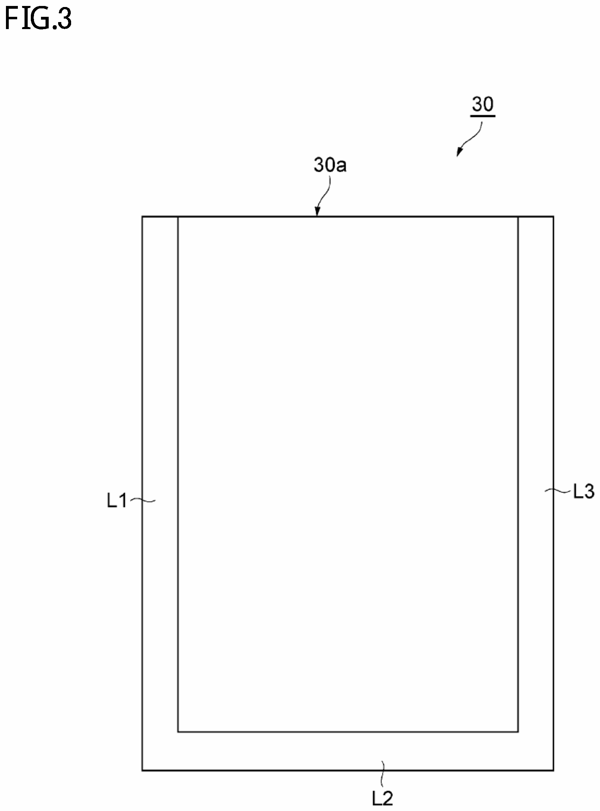

Another embodiment of the present disclosure is a packaging bag formed by fabricating the packaging material in the above embodiment into a bag. For example, as illustrated in Fig. 3, the packaging bag is obtained by heat-sealing three edges L1, L2, and L3 of two overlapping rectangular packaging materials to form a pouch. After a packaging bag 30 is filled with the contents through an opening 30a that has not been heat-sealed, the opening 30a can also be heat-sealed to seal the packaging bag 30 closed. Note that the packaging bag is not limited to this form. Other examples of the packaging bag include pillow, three-side seal, and gusseted formats. Examples of the contents include toiletries, liquid detergent, liquid seasoning, liquid materials such as soup, solid materials such as boiled food, and solid-liquid mixtures such as curry and oden. That is, the packaging bag may be a packaging bag for containing liquid materials, a packaging bag for containing solid materials, or a packaging bag for containing solid-liquid mixtures.

### Examples

The present disclosure will now be described based on examples and comparative examples. Note that the present disclosure is not limited to the following examples.

### <Example 1-1>

### (Production of Packaging Material)

### [Step (A)]

A 15-µm-thick biaxially oriented nylon film (manufactured by UNITIKA Ltd., trade name: EMBLEM-ONM (type: RT); EMBLEM is a registered trademark; ONY in the tables) was prepared as a first substrate. The surface of the first substrate was printed with water-based white flexographic ink (XS-911 manufactured by DIC Corporation; white ink in the tables) by flexographic printing to form a water-based ink layer with a thickness of 0.3 µm. In this manner, a laminate 1 including the first substrate and the water-based ink layer was obtained.

### [Steps (B) and (C)]

Takelac A626 (polyester polyol, solid content: 60% by mass, OH value: 2.2 × 10⁻⁴ mol/g, acid value: 3.0 × 10⁻⁵ mol/g) manufactured by Mitsui Chemicals, Inc. and Takenate A52 (polyisocyanate containing xylylene diisocyanate (XDI) and isophorone diisocyanate (IPDI), solid content: 75% by mass, NCO value: 2.5 × 10⁻³ mol/g) manufactured by Mitsui Chemicals, Inc. were mixed at a mass ratio (solid content ratio) of 4.80:0.75 to prepare a mixed solution. Then, the thus obtained mixed solution was combined with a hexamethylene diisocyanate (HDI) biuret (manufactured by Asahi Kasei Corporation, trade name: 24A-100, NCO value: 5.9 × 10⁻³ mol/g) as polyisocyanate (A) to prepare an adhesive. Polyisocyanate (A) was added so that the HDI biuret content in the adhesive was 3.5% by mass relative to the total solid content of the adhesive.

Then, a dry laminator was used to stack an adhesive layer and a second substrate on the water-based ink layer of the laminate obtained in step (A). Specifically, first, in the coating unit of the dry laminator, the adhesive prepared above (solid content concentration: 30% by mass) was applied to the surface of the water-based ink layer and dried at 80 °C for one minute to form an adhesive layer with a thickness of 3 µm. Then, a 60-µm-thick non-oriented polypropylene film (manufactured by Toray Industries, Inc., trade name: Torayfan ZK207) was prepared as a second substrate (sealant layer). In the lamination unit of the dry laminator, the formed adhesive layer was laminated with the second substrate. After the lamination, the resultant laminate was aged at 50 °C for 72 hours to yield a packaging material in Example 1-1.

### <Examples 1-2 to 1-4>

Packaging materials in Examples 1-2 to 1-4 were each produced in the same manner as in Example 1-1 except that the amount of polyisocyanate (A) added was adjusted so that the HDI biuret content in the adhesive (based on the total solid content of the adhesive) reached the corresponding value indicated in table 1.

### <Examples 1-5 to 1-8>

Packaging materials in Examples 1-5 to 1-8 were each produced in the same manner as in Example 1-1 except that an HDI isocyanurate (manufactured by Asahi Kasei Corporation, trade name: TPA-100, NCO value: 5.9 × 10⁻³ mol/g) was used as polyisocyanate (A) in place of the HDI biuret, and the amount of polyisocyanate (A) added was adjusted so that the HDI isocyanurate content in the adhesive (based on the total solid content of the adhesive) reached the corresponding value indicated in table 1.

### <Examples 2-1 to 2-8>

A laminate 2 was obtained in the same manner as in Example 1-1 except that a 12-µm-thick biaxially oriented polyethylene terephthalate film (manufactured by TOYOBO Co., Ltd., trade name: Toyobo Ester Film (type: 5102); Toyobo Ester is a registered trademark; PET in the tables) was used as a first substrate in place of the biaxially oriented nylon film, and water-based indigo flexographic ink (AQUA LIONA manufactured by Toyo Ink Co., Ltd.; AQUA LIONA is a registered trademark (the same hereinafter); indigo ink in the tables) was used as water-based ink in place of the water-based white flexographic ink. Then, packaging materials in Examples 2-1 to 2-8 were each produced in the same manner as in Examples 1-1 to 1-8 except that the laminate 2 was substituted for the laminate 1.

### <Examples 3-1 to 3-3>

A laminate 3 was obtained in the same manner as in Example 1-1 except that a 12-µm-thick barrier film with a water vapor barrier layer (an Al vapor-deposited layer and a water vapor barrier coating layer) on a biaxially oriented polyethylene terephthalate film (manufactured by TOPPAN Inc., trade name: GL-ARH; GL in the tables) was used as a first substrate in place of the biaxially oriented nylon film, and water-based red flexographic ink (AQUA LIONA manufactured by Toyo Ink Co., Ltd.; red ink in the tables) was used as water-based ink in place of the water-based white flexographic ink. Then, packaging materials in Examples 3-1 to 3-3 were each produced in the same manner as in Examples 1-2 to 1-4 except that the laminate 3 was substituted for the laminate 1.

### <Example 4>

A laminate 4 was obtained in the same manner as in Example 1-1 except that a 32-µm-thick unoriented polyethylene film (CNG, trade name: GAP-222.20HB; PE in the tables) was used as a first substrate in place of the biaxially oriented nylon film, and water-based red flexographic ink (AQUA LIONA manufactured by Toyo Ink Co., Ltd.; red ink in the tables) was used as water-based ink in place of the water-based white flexographic ink. Then, a packaging material in Example 4 was produced in the same manner as in Example 1-4 except that the laminate 4 was substituted for the laminate 1.

### <Example 5>

A laminate 5 was obtained in the same manner as in Example 1-1 except that a 20-µm-thick biaxially oriented polypropylene film (manufactured by Mitsui Chemicals Tohcello, Inc., trade name: U-1; PP in the tables) was used as a first substrate in place of the biaxially oriented nylon film, and water-based red flexographic ink (AQUA LIONA manufactured by Toyo Ink Co., Ltd.; red ink in the tables) was used as water-based ink in place of the water-based white flexographic ink. Then, a packaging material in Example 5 was produced in the same manner as in Example 1-4 except that the laminate 5 was substituted for the laminate 1.

### <Comparative Examples 1 to 5>

Packaging materials in Comparative Examples 1 to 5 were each produced in the same manner as in Examples 1-1, 2-1, 3-1, 4, and 5 except that polyisocyanate (A) (HDI biuret) was not used.

### <Example 6-1>

### (Preparation of Solvent-free Adhesive)

TSN 4864A (polyester polyol, OH value: 1.8 × 10⁻³ mol/g, acid value: 3.8 × 10⁻³ mol/g) manufactured by Toyo-Morton, Ltd. was prepared as a polyol base resin, and this polyol base resin was mixed with, as polyisocyanate (A), an HDI biuret (BASONAT HB 100 manufactured by BASF, NCO value: 5.3 × 10⁻³ mol/g) and an HDI isocyanurate (Takenate D177N manufactured by Mitsui Chemicals, Inc., NCO value: 4.8 × 10⁻³ mol/g). The polyol base resin, the HDI biuret, and the HDI isocyanurate were mixed in a mass ratio (solid content ratio) of 100:20:80. As a result, a solvent-free adhesive 1 was prepared.

### (Production of Packaging Material)

After the laminate 1 was obtained by the method in Example 1-1, the solvent-free adhesive 1 was applied to the water-based ink layer using a solvent-free laminator (Super Simplex SL, manufactured by Nordmeccanica S.p.A.) at a coating roll temperature of 70 °C, a coating rate of 200 m/min, and a coating weight of 2.0 g/m² to form an adhesive layer with a thickness of 2 µm. Then, a 60-µm-thick non-oriented polypropylene film (manufactured by Toray Industries, Inc., trade name: Torayfan ZK207) was prepared as a second substrate (sealant layer). In the lamination unit of the solvent-free laminator, the formed adhesive layer was laminated with the second substrate. After the lamination, the resultant laminate was aged at 40 °C for 72 hours to yield a packaging material in Example 6-1.

### <Example 6-2>

A solvent-free adhesive 2 was prepared in the same manner as in Example 6-1 except that IPDI (VESTANAT T 1890/100 manufactured by Evonik Industries AG, NCO value: 4.1 × 10⁻³ mol/g) was used in addition to the HDI biuret and the HDI isocyanurate as an isocyanate mixed with the polyol base resin, and the mixing ratio of the polyol base resin, the HDI biuret, the HDI isocyanurate, and the IPDI was set to a mass ratio (solid content ratio) of 100:15:35:50. Then, a packaging material in Example 6-2 was produced in the same manner as in Example 6-1 except that the solvent-free adhesive 2 was substituted for the solvent-free adhesive 1.

### <Example 6-3>

A solvent-free adhesive 3 was prepared in the same manner as in Example 6-2 except that the mixing ratio of the polyol base resin, the HDI biuret, the HDI isocyanurate, and the IPDI was changed to a mass ratio (solid content ratio) of 100:35:15:50. Then, a packaging material in Example 6-3 was produced in the same manner as in Example 6-2 except that the solvent-free adhesive 3 was substituted for the solvent-free adhesive 2.

### <Examples 7-1 to 7-3>

The laminate 2 was obtained by the method in Examples 2-1 to 2-8. Then, laminates in Examples 7-1 to 7-3 were each produced in the same manner as in Examples 6-1 to 6-3 except that the laminate 2 was substituted for the laminate 1.

### <Examples 8-1 to 8-3>

The laminate 3 was obtained by the method in Examples 3-1 to 3-3. Then, laminates in Examples 8-1 to 8-3 were each produced in the same manner as in Examples 6-1 to 6-3 except that the laminate 3 was substituted for the laminate 1.

### <Examples 9-1 to 9-3>

The laminate 4 was obtained by the method in Example 4. Then, laminates in Examples 9-1 to 9-3 were each produced in the same manner as in Examples 6-1 to 6-3 except that the laminate 4 was substituted for the laminate 1.

### <Examples 10-1 to 10-3>

The laminate 5 was obtained by the method in Example 5. Then, laminates in Examples 10-1 to 10-3 were each produced in the same manner as in Examples 6-1 to 6-3 except that the laminate 5 was substituted for the laminate 1.

### <Comparative Examples 6 to 10>

Packaging materials in Comparative Examples 6 to 10 were each produced in the same manner as in Examples 6-1, 7-1, 8-1, 9-1, and 10-1 except that polyisocyanate (A) (HDI biuret and HDI isocyanurate) was not used.

### <Determination of Nᵢ - Nᵢᵢ>

A test piece measuring 5 mm wide and 5 mm long was cut out from the packaging material in each of the examples and the comparative examples. The cutout test piece was embedded in a resin to prepare a block test piece. The resin used was a visible light-curable acrylic resin. Then, the block test piece was sectioned with an ultramicrotome to expose the cross-section of the packaging material in the thickness direction.

The exposed cross-section of the packaging material was subjected to SEM-EDX measurement for regions (i) to (iv) below to determine the semi-quantitative nitrogen (N) content (unit: % by mass). The SEM-EDX measurement was performed at an accelerating voltage of 3 kV and a magnification of ×50,000 in SEM observation.

Region (i): a rectangular region at a distance within 0.06 to 0.26 µm in the thickness direction of the first substrate from the interface between the first substrate and the water-based ink layer, with a length of 2.5 µm in the planar direction (the direction perpendicular to the thickness direction) of the first substrate

Region (ii): a rectangular region including a position at a distance corresponding to 30% of the thickness of the first substrate in the thickness direction of the first substrate from the interface between the first substrate and the water-based ink layer, with a length of 1 µm in the thickness direction and a length of 2.5 µm in the planar direction (the direction perpendicular to the thickness direction) of the first substrate

Region (iii): a rectangular region including a position at a distance corresponding to 60% of the thickness of the first substrate in the thickness direction of the first substrate from the interface between the first substrate and the water-based ink layer, with a length of 1 µm in the thickness direction and a length of 2.5 µm in the planar direction (the direction perpendicular to the thickness direction) of the first substrate

Region (iv): a rectangular region including a position at a distance corresponding to 80% of the thickness of the first substrate in the thickness direction of the first substrate from the interface between the first substrate and the water-based ink layer, with a length of 1 µm in the thickness direction and a length of 2.5 µm in the planar direction (the direction perpendicular to the thickness direction) of the first substrate

For regions (ii) to (iv), the distances in the thickness direction of the first substrate from the interface between the first substrate and the water-based ink layer have the following ranges:
- In Examples 1-1 to 1-8 and 6-1 to 6-3 and Comparative Examples 1 and 6 (first substrate = 15-um-thick ONY), 4.0 to 5.0 µm (region (ii)), 8.5 to 9.5 µm (region (iii)), and 11.5 to 12.5 µm (region (iv))
- In Examples 2-1 to 2-8, 3-1 to 3-3, 7-1 to 7-3, and 8-1 to 8-3, and Comparative Examples 2 to 3 and 7 to 8 (first substrate = 12-um-thick PET or GL-ARH), 3.0 to 4.0 µm (region (ii)), 6.5 to 7.5 µm (region (iii)), and 9.5 to 10.5 µm (region (iv))
- In Examples 4 and 9 and Comparative Examples 4 and 9 (first substrate = 32-um-thick PE), 9.0 to 10.0 µm (region (ii)), 18.5 to 19.5 µm (region (iii)), and 25.0 to 26.0 µm (region (iv))
- In Examples 5 and 10 and Comparative Examples 5 and 10 (first substrate = 20-um-thick PP), 5.5 to 6.5 µm (region (ii)), 11.5 to 12.5 µm (region (iii)), and 15.5 to 16.5 µm (region (iv))

With the semi-quantitative nitrogen content in region (i) above defined as Nᵢ, and the average of the semi-quantitative nitrogen contents in regions (ii) to (iv) above defined as Nᵢᵢ, the difference between these values (Nᵢ - Nᵢᵢ) was calculated. The results are listed in table 1.

### <Evaluation>

### (Measurement of Sealing Strength)

Two sheets each measuring 90 mm wide and 140 mm long were cut out from the packaging material in each of the examples and the comparative examples, aligned with the second substrates (sealant layers) of the two sheets facing each other so that the four edges of the sheets coincided, and heat-sealed to yield a laminate sample in each of the examples and the comparative examples. The heat-sealing was performed by heating and pressing the two aligned sheets at 150 °C and 3 kg/cm² for 0.5 seconds. Next, the laminate sample was subjected to a 15-mm-wide T-peel test at a peel rate of 300 mm/min under conditions of 20 °C and 30% RH in accordance with JIS K 6854 to measure the sealing strength of the laminate sample. The results are listed in table 1. In this evaluation, when the sealing strength was 45N/15 mm or more, the laminate sample was determined to have sufficiently high sealing strength.

### (Adhesive Strength after Retort Processing)

The adhesive strength after retort processing between the first substrate and the second substrate of the packaging material in each of the examples and the comparative examples was measured according to the following procedure (1) to (5). The results are listed in table 1. In this evaluation, when the adhesive strength was 1.5 N/15 mm or more, the packaging material was determined to have sufficiently high adhesive strength.
(1): Two sheets each measuring 140 mm wide and 100 mm long were cut out from the packaging material and aligned with the second substrates of the two sheets facing each other so that the four edges of the sheets coincided, and three of the four edges were heat-sealed to prepare a packaging bag having one open edge.
(2): After 50 g of water was added to the packaging bag, the open edge of the packaging bag was heat-sealed to prepare a test pouch.
(3): The test pouch prepared in (2) was subjected to retort processing at 121 °C for 30 minutes.
(4): After the retort processing in (3), a test piece measuring 15 mm wide and 200 mm long was cut out from one of the two sheets forming the test pouch.
(5): The test piece was subjected to a 15-mm-wide T-peel test at a peel rate of 300 mm/min under 20 °C and 30% RH conditions in accordance with JIS K 6854 to measure the adhesive strength between the first substrate and the second substrate.

The heat-sealing in (1) and (2) was performed by heating and pressing the corresponding edges with a 15-mm-wide seal bar at 150 °C and 3 kg/cm² for 0.5 seconds.

### (Production of Packaging Bag and Evaluation of Drop Resistance)

The packaging material in each of the examples and the comparative examples was used to produce a packaging bag, and the drop resistance of the packaging bag was evaluated. Specifically, first, two sheets each measuring 130 mm wide and 250 mm long were cut out from the packaging material, aligned with the second substrates (sealant layers) of the two sheets facing each other so that the four edges of the sheets coincided, and three of the four edges were heat-sealed to prepare a pouch-type packaging container (packaging bag) having one open edge as illustrated in Fig. 3. The heat sealing was performed by heating and pressing the three edges with a 15-mm-wide seal bar at 150 °C and 3 kg/cm² for 0.5 seconds. Next, after 100 ml of water was poured into the packaging bag through the upper opening, the opening (top) was heat-sealed under the same conditions as for the production of the packaging bag. After the sealed packaging bag was allowed to stand in a refrigerator at 5 °C for 12 hours, the packaging bag was removed from the refrigerator and immediately dropped freely from a height of 1 m. The appearance of the packaging bag after the drop was visually inspected to check for delamination. Packaging bags without delamination were rated as good, whereas packaging bags with delamination were rated as poor. The results are listed in table 1.

**[Table 1]**

| | FIRST SUBSTRATE | WATER-BASED INK | POLYISOCYANATE (A) | | Ni - Nii | EVALUATION | | |
|---|---|---|---|---|---|---|---|---|
| | | | TYPE | CONTENT (% BY MASS) | | SEALING STRENGTH (15 N/15 mm) | ADHESIVE STRENGTH AFTER RETORT PROCESSING (N/15 mm) | DROP RESISTANCE DELAMINATION STATUS |
| EX. 1-1 | ONY | WHITE INK | HDI BIURET | 3.5 | 0.6 | 45 | 3.0 | GOOD |
| EX. 1-2 | | | | 6.7 | 1.3 | 50 | 4.0 | GOOD |
| EX. 1-3 | | | | 9.8 | 1.9 | 50 | 4.3 | GOOD |
| EX. 1-4 | | | | 15.3 | 3.1 | 60 | 5.0 OR MORE | GOOD |
| EX. 1-5 | | | HDI ISOCYANURATE | 3.5 | 0.6 | 45 | 3.0 | GOOD |
| EX. 1-6 | | | | 6.7 | 1.3 | 50 | 4.0 | GOOD |
| EX. 1-7 | | | | 9.8 | 1.9 | 50 | 4.3 | GOOD |
| EX. 1-8 | | | | 15.3 | 3.1 | 60 | 5.0 OR MORE | GOOD |
| EX. 2-1 | PET | INDIGO INK | HDI BIURET | 3.5 | 0.6 | 45 | 1.5 | GOOD |
| EX. 2-2 | | | | 6.7 | 1.3 | 50 | 2.5 | GOOD |
| EX. 2-3 | | | | 9.8 | 1.9 | 50 | 3.3 | GOOD |
| EX. 2-4 | | | | 15.3 | 3.1 | 60 | 5.0 OR MORE | GOOD |
| EX. 2-5 | | | HDI ISOCYANURATE | 3.5 | 0.6 | 45 | 1.5 | GOOD |
| EX. 2-6 | | | | 6.7 | 1.3 | 50 | 2.5 | GOOD |
| EX. 2-7 | | | | 9.8 | 1.9 | 50 | 3.3 | GOOD |
| EX. 2-8 | | | | 15.3 | 3.1 | 60 | 5.0 OR MORE | GOOD |
| EX. 3-1 | GL | RED INK | HDI BIURET | 6.7 | 1.3 | 45 | 1.5 | GOOD |
| EX. 3-2 | | | | 9.8 | 1.9 | 50 | 1.8 | GOOD |
| EX. 3-3 | | | | 15.3 | 3.1 | 50 | 2.5 | GOOD |
| EX. 4 | PE | RED INK | HDI BIURET | 15.3 | 3.1 | 60 | 5.0 | GOOD |
| EX. 5 | PP | RED INK | HDI BIURET | 15.3 | 3.1 | 60 | 5.0 | GOOD |
| COMP. EX. 1 | ONY | WHITE INK | - | 0 | 0 | 35 | 2.0 | POOR |
| COMP. EX. 2 | PET | INDIGO INK | | 0 | 0 | 30 | 1.2 | POOR |
| COMP. EX. 3 | GL | RED INK | | 0 | 0 | 30 | 0.9 | POOR |
| COMP. EX. 4 | PE | RED INK | | 0 | 0 | 35 | 2.0 | POOR |
| COMP. EX. 5 | PP | RED INK | | 0 | 0 | 35 | 2.0 | POOR |

**[Table 2]**

| | FIRST SUBSTRATE | WATER-BASED INK | POLYISOCYANATE (A) | | Ni - Nii | EVALUATION | | |
|---|---|---|---|---|---|---|---|---|
| | | | TYPE | CONTENT (% BY MASS) | | SEALING STRENGTH (15 N/15 mm) | ADHESIVE STRENGTH AFTER RETORT PROCESSING (N/15 mm) | DROP RESISTANCE DELAMINATION STATUS |
| EX. 6-1 | ONY | WHITE INK | HDI BIURET: HDI ISOCYANURATE = 2:8 | 50 | 1.4 | 60 | 5.0 OR MORE | GOOD |
| EX. 6-2 | | | HDI BIURET: HDI ISOCYANURATE = 3:7 | 25 | 1.6 | 60 | 5.0 OR MORE | GOOD |
| EX. 6-3 | | | HDI BIURET: HDI ISOCYANURATE = 7:3 | 25 | 1.6 | 60 | 5.0 OR MORE | GOOD |
| EX. 7-1 | PET | INDIGO INK | HDI BIURET: HDI ISOCYANURATE = 2:8 | 50 | 1.4 | 60 | 5.0 OR MORE | GOOD |
| EX. 7-2 | | | DI BIURET: HDI ISOCYANURATE = 3:7 | 25 | 1.6 | 60 | 5.0 OR MORE | GOOD |
| EX. 7-3 | | | HDI BIURET: HDI ISOCYANURATE = 7:3 | 25 | 1.6 | 60 | 5.0 OR MORE | GOOD |
| EX. 8-1 | GL | RED INK | HDI BIURET: HDI ISOCYANURATE = 2:8 | 50 | 1.4 | 60 | 2.0 | GOOD |
| EX. 8-2 | | | DI BIURET: HDI ISOCYANURATE = 3:7 | 25 | 1.6 | 60 | 2.0 | GOOD |
| EX. 8-3 | | | HDI BIURET: HDI ISOCYANURATE = 7:3 | 25 | 1.6 | 60 | 2.0 | GOOD |
| EX. 9-1 | PE | RED INK | HDI BIURET: HDI ISOCYANURATE = 2:8 | 50 | 1.4 | 60 | 5.0 OR MORE | GOOD |
| EX. 9-2 | | | DI BIURET: HDI ISOCYANURATE = 3:7 | 25 | 1.6 | 60 | 5.0 OR MORE | GOOD |
| EX. 9-3 | | | HDI BIURET: HDI ISOCYANURATE = 7:3 | 25 | 1.6 | 60 | 5.0 OR MORE | GOOD |
| EX. 10-1 | PP | RED INK | HDI BIURET: HDI ISOCYANURATE = 2:8 | 50 | 1.4 | 60 | 5.0 OR MORE | GOOD |
| EX. 10-2 | | | DI BIURET: HDI ISOCYANURATE = 3:7 | 25 | 1.6 | 60 | 5.0 OR MORE | GOOD |
| EX. 10-3 | | | HDI BIURET: HDI ISOCYANURATE = 7:3 | 25 | 1.6 | 60 | 5.0 OR MORE | GOOD |
| COMP. EX. 6 | ONY | WHITE INK | - | 0 | 0 | 30 | 2.0 | POOR |
| COMP. EX. 7 | PET | INDIGO INK | | 0 | 0 | 30 | 2.0 | POOR |
| COMP. EX. 8 | GL | RED INK | | 0 | 0 | 30 | 0.9 | POOR |
| COMP. EX. 9 | PE | RED INK | | 0 | 0 | 30 | 2.0 | POOR |
| COMP. EX. 10 | PP | RED INK | | 0 | 0 | 30 | 2.0 | POOR |

The "content" in tables 1 and 2 is the content (total quantity) of polyisocyanate (A) in the adhesive with respect to the total solid content of the adhesive.

- 1: first substrate
- 2: water-based ink layer
- 2a: pigment
- 3: adhesive layer
- 4: second substrate
- 10, 20: packaging material
- 30: packaging bag

## Claims

1. A packaging material comprising:
a first substrate;
a water-based ink layer;
an adhesive layer; and
a second substrate in this order, wherein
the adhesive layer is formed of a urethane-based adhesive containing a polyisocyanate and a polyol,
the polyisocyanate contains a chain isocyanate with a symmetrical structure or an isocyanate polymer derived from the chain isocyanate, and
the polyisocyanate partially penetrates a region near an interface between the water-based ink layer and the first substrate so as to satisfy formula (a):
formula (a): (Nᵢ - Nᵢᵢ) ≥ 0.5
wherein in formula (a),
Nᵢ denotes a nitrogen content (unit: % by mass) in the first substrate measured in region (i) at a distance within 0.06 to 0.26 µm from the interface, and
Nᵢᵢ denotes an average of nitrogen contents (unit: % by mass) in the first substrate measured in 1-µm-thick region (ii), 1-µm-thick region (iii), and 1-µm-thick region (iv) including positions at distances from the interface corresponding to 30%, 60%, and 80% of a thickness of the first substrate, respectively.

2. The packaging material according to claim 1, wherein the polyisocyanate contains a biuret or an isocyanurate of the chain isocyanate as the isocyanate polymer.

3. The packaging material according to claim 1, wherein the chain isocyanate is hexamethylene diisocyanate.

4. The packaging material according to claim 1, wherein the water-based ink layer is formed from water-based flexographic ink.

5. The packaging material according to claim 1, wherein the first substrate includes at least one selected from the group consisting of an oriented polyethylene terephthalate film, an oriented polypropylene film, an oriented nylon film, and an oriented polyethylene film.

6. The packaging material according to claim 1, wherein the first substrate includes a water vapor barrier layer.

7. The packaging material according to claim 1, wherein the polyol contains a polyester polyol.

8. The packaging material according to claim 1, wherein the urethane-based adhesive is an adhesive for dry lamination.

9. The packaging material according to claim 1, wherein the (Nᵢ - Nᵢᵢ) is greater than or equal to 1.2.

10. The packaging material according to claim 1, wherein the first substrate and the second substrate have an adhesive strength of 1.5 N/15 mm or more therebetween, the adhesive strength being measured according to the following procedure (1) to (5):
(1): two sheets each measuring 140 mm wide and 100 mm long are cut out from the packaging material and aligned with the second substrates of the two sheets facing each other so that four edges of the sheets coincide, and three of the four edges are heat-sealed to prepare a packaging bag having one open edge,
(2): after 50 g of water is added to the packaging bag, the open edge of the packaging bag is heat-sealed to prepare a test pouch,
(3): the test pouch prepared in (2) is subjected to retort processing at 121 °C for 30 minutes,
(4): after the retort processing in (3), a test piece measuring 15 mm wide and 200 mm long is cut out from one of the two sheets forming the test pouch, and
(5): the test piece is subjected to a 15-mm-wide T-peel test at a peel rate of 300 mm/min under conditions of 20 °C and 30% RH in accordance with JIS K 6854 to measure the adhesive strength between the first substrate and the second substrate.

11. A packaging bag formed by fabricating the packaging material according to any one of claims 1 to 10 into a bag.
